# EUROPEAN PATENT APPLICATION

(11) **EP 4 106 342 A1**
(43) Date of publication of application: **21.12.2022**
(21) Application number: 20921257.0
(22) Date of filing: 26.10.2020
(51) Int. Cl.: H04Q 11/00, H04J 3/16

(54) **METHOD AND APPARATUS FOR SERVICE PROCESSING IN OPTICAL TRANSPORT NETWORK, AND ELECTRONIC DEVICE**

(30) Priority: 28.02.2020 CN 202010126725
(71) Applicant: ZTE Corporation, Shenzhen, Guangdong 518057 (CN)
(72) Inventor: ZHANG, Yuanbin, Shenzhen, Guangdong 518057 (CN); YUAN, Yan, Shenzhen, Guangdong 518057 (CN)
(74) Representative: Canzler & Bergmeier Patentanwälte Partnerschaft mbB
(86) International application number: PCT/CN2020/123735
(87) International publication number: WO 2021/169341

(57) **Abstract**

Provided in the embodiments of the present disclosure is a method for service processing in an optical transport network. The method comprises: mapping a customer service to a service container; and mapping the service container to a data frame, wherein the data frame comprises multiple unit blocks; the unit blocks are used for bearing the service container; the unit blocks are divided into first-type unit blocks and second-type unit blocks; the first-type unit blocks comprise a payload portion; the second-type unit blocks comprise a payload portion and an overhead portion; the payload portion is used for bearing service data; and the overhead portion comprises identification information of the service container. Further provided in the embodiments of the present disclosure are an apparatus for service processing in an optical transport network, an electronic device, and a computer-readable medium.

## Description

### TECHNICAL FIELD

Embodiments of the present disclosure relates to the field of optical communication technology, and in particular, to a method and an apparatus for service processing in optical transport network, an electronic device, and a computer readable medium.

### BACKGROUND

In the definition of existing Optical Transport Network (OTN), a method for loading multiple service signals into payload of optical transport network signal is as follows: first, the area of the optical transport network signal is divided into n time slots, which are realized by way of byte interleaving; then, the service signals are loaded into one or more time slots in the payload of the optical transport network signal.

According to the existing optical transport network standard G.709, the minimum time slot granularity of the existing OTN technology is 1.25 Gbps; when bearing services with a bandwidth lower than 1.25 Gbps, such as Fast Ethernet (FE) services, Synchronous Transfer Module-1 (STM-1) services, E1 services and other services with small bandwidth, the bandwidth waste of the optical transport network is very serious. For example, the E1 signal with a bandwidth of 2.048 Mbps is loaded in a time slot with a bandwidth of 1.25 Gbps, and the bandwidth waste is more than 99%. Therefore, a transmission technology is desired to realize a method of efficiently bearing a small-granularity service in the OTN.

### SUMMARY

Embodiments of the present disclosure provide a method and an apparatus for service processing in optical transport network, an electronic device, and a computer readable medium.

In a first aspect, the embodiments of the present disclosure provide a method for service processing in optical transport network, including: mapping a client service into a service container; and mapping the service container into a data frame, wherein the data frame includes multiple unit blocks for bearing the service container, the unit blocks are divided into first-type unit blocks and second-type unit blocks, the first-type unit blocks include a payload portion, and the second-type unit blocks include a payload portion and an overhead portion, the payload portion is used for bearing service data, and the overhead portion includes identification information of the service container.

In a second aspect, the embodiments of the present disclosure provide an apparatus for service processing in optical transport network, including: a first mapping module configured to map a client service into a service container; and a second mapping module configured to map the service container into a data frame, wherein the data frame includes multiple unit blocks for bearing the service container, the unit blocks are divided into first-type unit blocks and second-type unit blocks, the first-type unit blocks include a payload portion, and the second-type unit blocks include a payload portion and an overhead portion, the payload portion is used for bearing service data, and the overhead portion includes identification information of the service container.

In a third aspect, the embodiments of the present disclosure further provide an electronic device including: one or more processors and a memory; wherein the memory stores one or more programs thereon, and the one or more programs, when executed by the one or more processors, cause the one or more processors to implement the method for service processing provided by the first aspect.

In a fourth aspect, the embodiments of the present disclosure further provide a computer readable medium storing a computer program thereon, wherein the computer program, when executed by a processor, cause the processor to implement the method for service processing provided by the first aspect.

### BRIEF DESCRIPTION OF DRAWINGS

Fig. 1 is a schematic diagram of an optical channel frame structure involved in the present disclosure;
Fig. 2 is a schematic diagram that the payload area of the optical channel frame structure is divided into 4 time slots in the optical transport standard in the related art;
Fig. 3 is a flowchart of a method for service processing in optical transport network according to the present disclosure;
Fig. 4 is a schematic diagram of dividing an OTUk frame into unit blocks in the present disclosure;
Fig. 5 is a schematic structural diagram of a first-type unit block and a second-type unit block in the present disclosure;
Fig. 6 is a flowchart of a specific implementation of Operation S102 in the present disclosure;
Fig. 7 is a flowchart of a specific implementation for realizing Operation S1022 in the present disclosure;
Fig. 8 is a flowchart of a specific implementation for realizing Operation S1023 in the present disclosure;
Fig. 9 is a schematic diagram of dividing a payload area of an ODUO frame into unit blocks by 16 bytes in the present disclosure;
Fig. 10 is another schematic structural diagram of a first-type unit block and a second-type unit block in the present disclosure;
Fig. 11 is a schematic diagram of bearing services OSU#1 and OSU#101 in different ODUO frames in the present disclosure;
Fig. 12 is still another schematic structural diagram of a first-type unit block and a second-type unit block in the present disclosure;
Fig. 13 is a structural block diagram of an apparatus for service processing in optical transport network according to the present disclosure; and
Fig. 14 is a structural block diagram of an electronic device according to the present disclosure.

### DETAIL DESCRIPTION OF EMBODIMENTS

In order for those skilled in the art to better understand the technical solutions of the present disclosure, a method and an apparatus for service processing in optical transport network, an electronic device, and a computer readable medium provided by the present disclosure will be described in detail below in combination with the accompanying drawings.

Exemplary embodiments will be described more fully hereinafter with reference to the accompanying drawings although they may be embodied in different forms and should not be construed as limited to the embodiments set forth herein. Rather, these embodiments are provided so that this disclosure will be thorough and complete, and will fully convey the scope of the disclosure to those skilled in the art.

Various embodiments of the present disclosure and various features in the embodiments may be combined with each other as long as there is no conflict.

As used herein, the term "and/or" includes any and all combinations of one or more of the associated listed items.

The terms used herein are used to describe particular embodiments only and are not intended to limit the present disclosure. As used herein, the singular forms "a" and "the" are intended to include the plural forms as well, unless the context clearly dictates otherwise. It will also be understood that when the terms "comprising" and/or "made of' are used in this specification, the stated features, integers, steps, operations, elements and/or components are specified to be present, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will also be understood that terms such as those defined in commonly used dictionaries should be construed as having meanings consistent with their meanings in the context of the related art and this disclosure, and will not be construed as having idealized or over-formal meanings, unless explicitly so limited herein.

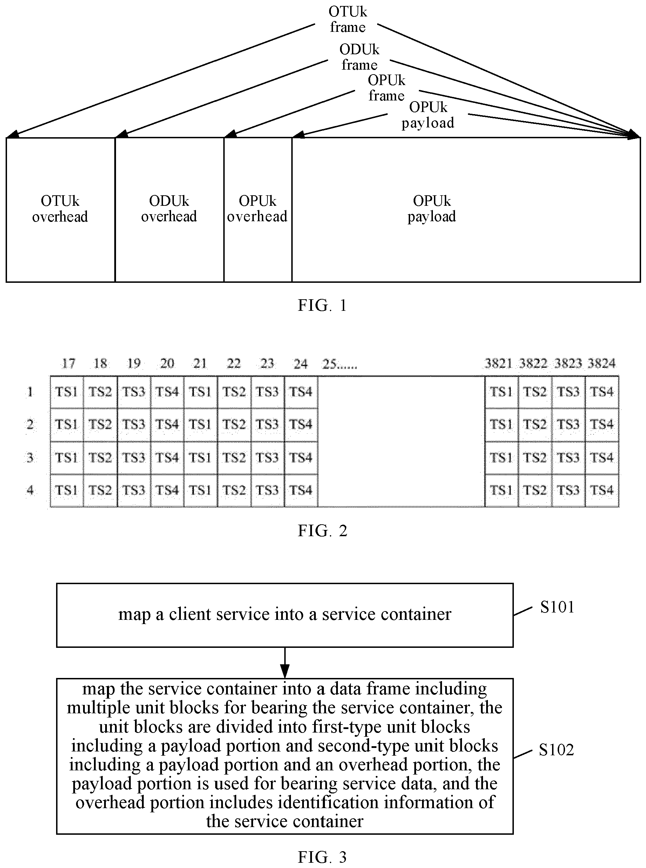

Fig. 1 is a schematic diagram of an optical channel frame structure involved in the present disclosure. As shown in Fig. 1, in the present disclosure, description is made by taking an example that the optical transport network signal is an Optical channel Transport Unit (OTU) signal. The OTU signal consists of OTUk frames, including an overhead area and a payload area. The overhead area includes: overhead of Optical channel Transport Unit (referred to as "OTUk overhead", k can take values of 1, 2, 3, 4), overhead of Optical channel Data Unit (ODU) (referred to as "ODUk overhead", k can take values of 0, 1, 2, 2e, 3, 4), and overhead of Optical channel Payload Unit (OPU) (referred to as "OPUk overhead", k can take values of 0, 1, 2, 2e, 3, 4). The remainder of the OTUk frame except the OTUk overhead is referred to as the ODUk frame, the remainder of the ODUk frame except the ODUk overhead is referred to as the OPUk frame, and the remainder of the OPUk frame except the OPUk overhead is referred to as the OPUk payload (that is, the payload area of the optical channel frame structure). The payload area can be used for bearing service signals.

Fig. 2 is a schematic diagram that the payload area of the optical channel frame structure is divided into 4 time slots in the optical transport standard in the related art. As shown in Fig. 2, in the definition of the existing optical transport network, the method for loading multiple service signals into the payload of the optical transport network signal is dividing the payload of the optical transport network signal into n time slots, and then loading the service signals into one or more time slots in the payload of the optical transport network signal, wherein the time slots are realized by way of byte interleaving. An exemplary description is given by taking an example that the payload area of the OTUk is divided into 4 time slots. The OTUk frame consists of byte blocks of 4 rows and 3824 columns, an area corresponding to the column numbers from 1 to 16 is the overhead area (not shown), and an area corresponding to the column numbers from 17 to 3824 is the payload area. One small box in Fig. 2 represents one byte, and the OPUk payload area of one OPUk frame consists of 4^{∗}3808 bytes, which are arranged in 4 rows and 3808 columns as shown in Fig. 2. Fig. 2 shows the situation in which the OPUk payload is divided into 4 time slots by way of byte interleaving. That is, in a total of 3808 columns, starting from column 17, adjacent 4 bytes form a group, the 4 bytes in each group are divided to 4 different time slots TS1, TS2, TS3, TS4, respectively, that is, 4 consecutive bytes starting from column 17 represent 4 time slots, so that all 4^{∗}3808 bytes in the OPUk payload are divided into 4 time slots, named TS1, TS2, TS3, TS4, respectively, and one ODU service can be loaded in m time slots (m is less than the maximum number n of time slots in the OPUk payload; n=4 in Fig. 2).

According to the existing optical transport network standard G.709, the smallest ODUk in the optical transport network is ODUO and the rate is 1.25G. Thus, theoretically, the OPUk payload in the OTUk frames of all rates should be divided into the slots of 1.25G granularity, so that the ODUO can be loaded most efficiently. In this case, for some services with small bandwidth, such as FE services, STM-1 services, E1 services, etc., if they are directly carried by time slots, it will lead to serious waste of bandwidth.

To solve the above technical problems, the present disclosure proposes corresponding solutions, which will be exemplarily described below in combination with the accompanying drawings.

Fig. 3 is a flowchart of a method for service processing in optical transport network according to the present disclosure. As shown in Fig. 3, the method for service processing in optical transport network includes operations S101 to S102.

At Operation S101, a client service is mapped into a service container.

In the present disclosure, the client service specifically refers to a service that is a small-granularity service for the optical transport network frame. Specifically, a ratio of the bandwidth of the client service to the bandwidth of the payload area of the optical transport network frame is less than a preset ratio, and the specific value of the preset ratio is set by professionals in the industry. Generally, the value of the preset ratio is less than or equal to 10%. In the present disclosure, it is only necessary to ensure that the bandwidth of the client service is smaller than the bandwidth of the payload area of the optical transport network frame.

In the present disclosure, the service container includes an ODU frame or an Optical Service Unit (OSU) frame. The process of mapping the client service to the service container belongs to the conventional technology in the art, and will not be repeated here.

At Operation S102, the service container is mapped into a data frame, wherein the data frame includes multiple unit blocks for bearing the service container, the unit blocks are divided into first-type unit blocks and second-type unit blocks, the first-type unit blocks include a payload portion, and the second-type unit blocks include a payload portion and an overhead portion, the payload portion is used for bearing service data, and the overhead portion includes identification information of the service container.

Each unit block bears data of at most one service container; the identification information of the service container is used to identify the service container carried by the unit block.

In practical applications, each client service is assigned a corresponding Tributary Port Number (TPN), and the corresponding client service can be identified based on the TPN. Based on the above situation, in the present disclosure, the TPN of the client service carried by the service container may be used as the identification information of the service container.

Obviously, the identification information of the service container in the present disclosure may also be implemented in other forms, as long as the identification information can be used to distinguish different service containers.

In the present disclosure, the overhead portion may further include check information for checking the identification information, so as to ensure the reliability of the identification information in the overhead portion. As an option, Cyclic Redundancy Check (CRC) or Forward Error Correction (FEC) check is performed on the identification information based on the check information, so as to ensure the reliability of the identification information.

In the present disclosure, the OTN frame may be an ODU frame or a FlexO frame; the data frame consists of the payload area of the ODU frame, or the payload area of the FlexO frame.

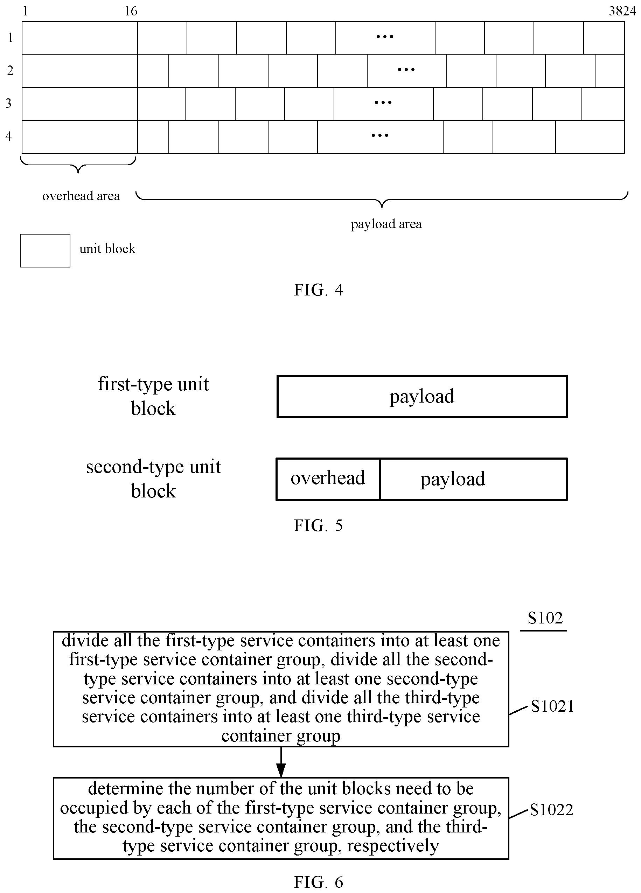

Fig. 4 is a schematic diagram of dividing an OTUk frame into unit blocks in the present disclosure. As shown in Fig. 4, taking the division of the payload area of one OTUk frame into unit blocks as an example, the payload area of the OTUk frame can be divided into multiple unit blocks; wherein a unit block refers to a fixed number (greater than 1) of consecutive bits, and the unit block is used for bearing a service container (it can also be regarded as bearing a client service).

Fig. 5 is a schematic structural diagram of a first-type unit block and a second-type unit block in the present disclosure. As shown in Fig. 5, the unit blocks can be divided into two types: the first-type unit blocks and the second-type unit blocks. The first-type unit blocks include a payload portion, the second-type unit blocks include a payload portion and an overhead portion. The lengths of the payload portion and the overhead portion can be set according to actual needs, the payload portion is used for bearing service data, and the overhead portion includes the identification information of the service container.

It should be noted that, in the present disclosure, the number and length of the first-type unit blocks and the second-type unit blocks in each frame can be flexibly adjusted according to the type and bandwidth of the carried client service, and are not fixed values.

The technical solution of the present disclosure does not limit the lengths of the divided unit blocks, that is, the lengths of different unit blocks may be the same or different. Fig. 5 only exemplarily shows a case where the lengths of the first-type unit block and the second-type unit block are the same, and in this case, the length of the payload portion in the first-type unit block is greater than the length of the payload portion in the second-type unit block.

For the sake of convenience, it is assumed that division is performed in a case of a unit block of fixed length K; if the payload area can be divided into an integer number of unit blocks and the number of divided unit blocks is N, the bandwidth corresponding to each unit block is Q/N, where Q is the bandwidth of the entire payload area; if the payload area cannot be divided into an integer number of unit blocks, division is performed according to the maximum number of unit blocks that can be divided (assuming that the number of divided unit blocks is N), the remaining data in the payload area is used as filler filled at the end of the frame or distributed between frames. At this time, the bandwidth of each unit block is K^{∗}Q/(N^{∗}K+F), where F is the number of the filled bits in the payload area, F<K, and N^{∗}K+F is the total number of bits in the payload area.

In the present disclosure, if the data frame is divided into N unit blocks, the maximum number of services that can be delivered by the data frame is N, and the bandwidth of each unit block may also be small, which can improve bandwidth utilization. The value K of the size of the unit block should not be too large. An excessively large value means that the number of service bits that need to be cached will increase and thus the delay will increase. It should also not be too small. This is because the second-type unit block contains the overhead portion, and the overhead portion occupies some bits. If the value of K is too small, it means that the overhead portion in the unit block occupies a large proportion, and the payload portion for delivering client service data occupies a small proportion, resulting in a low data transmission efficiency. In practical applications, the value of K can be set and adjusted according to actual needs.

In the present disclosure, the service containers are divided into first-type service containers, second-type service containers, and third-type service containers. The first-type service containers are service containers for bearing services of fixed bit rate that require clock transparent transmission, the second-type service containers are service containers for bearing services of fixed bit rate that do not require clock transparent transmission, and the third-type service containers are service containers for bearing services of variable bit rate. The first-type service containers are carried in the first-type unit blocks, and the second-type service containers and the third-type service containers are carried in the second-type unit blocks. That is, the first-type unit blocks are used for bearing the services of fixed bit rate that require clock transparent transmission, and the second-type unit blocks are used for bearing the services of fixed bit rate that do not require clock transparent transmission and the services of variable bit rate.

Fig. 6 is a flowchart of a specific implementation of Operation S102 in the present disclosure. As shown in Fig. 6, in the present disclosure, Operation S102 includes operations S1021 to S1022.

At Operation S1021, all the first-type service containers are divided into at least one first-type service container group, all the second-type service containers are divided into at least one second-type service container group, and all the third-type service containers are divided into at least one third-type service container group, wherein each first-type service container group includes at least one first-type service container, each second-type service container group includes at least one second-type service container, and each third-type service container group includes at least one third-type service container.

In Operation S1021, when the multiple first/second/third-type service containers are divided into at least one first/second/third-type service container group, specific division rules are not limited; for example, all the first/second/third-type service containers are divided into one first/second/third-type service container group; or for a certain type of service containers, all service containers of this type are evenly divided into multiple service container groups; or for a certain type of service containers, all service containers of this type are divided into multiple service container groups containing different numbers of service containers.

In the present disclosure, it is sufficient as long as the number of second/third-type service containers included in each second/third-type service container group does not exceed a preset maximum number of services that can be accommodated. The maximum number of services that can be accommodated can be set by configuring the size of bits used for representing the identification information in the overhead portion of the second-type unit block; for example, the size of bits used for representing the identification information in the overhead portion is *a* bits, then there are at most 2*^{a}* types of identification information, and the maximum number of second/third-type service containers that can be accommodated in one second/third-type service container group is at most 2*^{a}*. Exemplarily, if the value of *a* is 4, the maximum number of the second/third-type service containers that can be accommodated in the second/third-type service container group is 2⁴=16.

At Operation S1022, the numbers of the unit blocks need to be occupied by each first-type service container group, each second-type service container group, and each third-type service container group are determined, respectively.

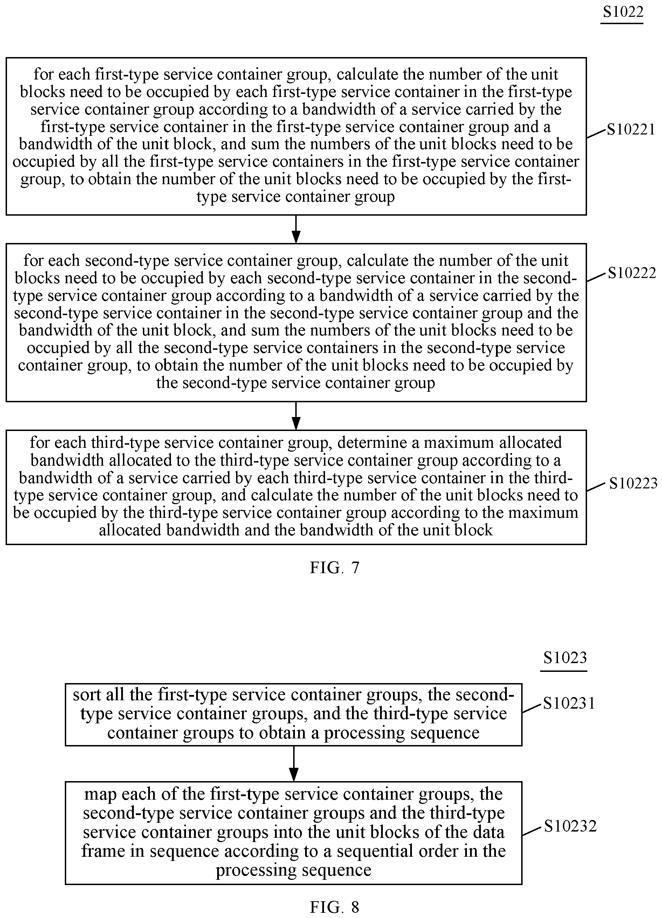

Fig. 7 is a flowchart of a specific implementation for realizing Operation S1022 in the present disclosure. As shown in Fig. 7, in the present disclosure, Operation S1022 includes operations S10211 to S10213.

At Operation S10221, for each first-type service container group, the number of the unit blocks need to be occupied by each first-type service container in the first-type service container group is calculated according to a bandwidth of a service carried by the first-type service container in the first-type service container group and a bandwidth of the unit blocks, and the numbers of the unit blocks need to be occupied by all the first-type service containers in the first-type service container group are summed, to obtain the number of the unit blocks need to be occupied by the first-type service container group.

Based on the foregoing, it can be known that the bandwidth of each unit block can be obtained when the number N of unit blocks, the size K of the unit block, the size of the payload area, and the bandwidth Q of the payload area are determined. For a first-type service container, the bandwidth of the first-type service container is divided by the bandwidth of the unit block; if the calculation result is an integer, the calculation result is the number of unit blocks need to be occupied by the first-type service container; if the calculation result is not an integer, the calculation result is rounded up to obtain the number of unit blocks need to be occupied by the first-type service container.

At Operation S10222, for each second-type service container group, the number of the unit blocks need to be occupied by each second-type service container in the second-type service container group is calculated according to a bandwidth of a service carried by each second-type service container in the second-type service container group and the bandwidth of the unit blocks, and the numbers of the unit blocks need to be occupied by all the second-type service containers in the second-type service container group are summed, to obtain the number of the unit blocks need to be occupied by the second-type service container group.

The method for calculating the number of unit blocks need to be occupied by the second-type service container is the same as the method for calculating the number of unit blocks need to be occupied by the first-type service container, which will be not repeated here.

At Operation S10223, for each third-type service container group, a maximum allocated bandwidth allocated to this third-type service container group is determined according to bandwidths of services carried by the third-type service containers in the third-type service container group, and the number of the unit blocks need to be occupied by the third-type service container group is calculated according to the maximum allocated bandwidth and the bandwidth of the unit blocks.

In the third-type service container group, the client services carried therein are services of variable bit rate, thus the bandwidth can be shared among these client services. For a certain third-type service container group, according to the maximum bandwidth (also referred to as peak bandwidth) for the services of variable bit rate carried in the third-type service container group, a maximum allocated bandwidth can be allocated to the third-type service container group by a preset algorithm, that is, as the maximum allocated bandwidth allocated to the third-type service container group. It should be noted that the technical solution of the present disclosure does not limit the specific algorithm for determining the "maximum allocated bandwidth", and it is only necessary to ensure that the maximum allocated bandwidth allocated to the third-type service container group is greater than or equal to the peak bandwidth of a service of variable bit rate that has the largest peak bandwidth in the third-type service container group, and is less than or equal to the sum of the peak bandwidths of all the services of variable bit rate in the third-type service container group.

For the third-type service container group, the maximum allocated bandwidth of the third-type service container group is divided by the bandwidth of the unit block; if the calculation result is an integer, then the calculation result is the number of the unit blocks need to be occupied by the third-type service container group; if the calculation result is not an integer, the calculation result is rounded up to obtain the number of the unit blocks need to be occupied by the third-type of service container group.

It should be noted that, when there is no service of fixed bit rate that requires clock transparent transmission in the client service, the first-type service container group does not exist, and Operation S10221 may not be performed in this case; when there is no service of fixed bit rate that does not require clock transparent transmission in the client service, the second-type service container group does not exist, and Operation S10222 may not be performed in this case; when there is no service of variable bit rate in the client service, the third-type service container group does not exist, and Operation S10223 may not be performed in this case.

At Operation S1023, for each first-type service container group, each second-type service container group, and each third-type service container group, the first-type service container group, the second-type service container group, or the third-type service container group is mapped into the unit blocks of the data frame according to the number of the unit blocks need to be occupied by the first-type service container group, the second-type service container group, or the third-type service container group.

Fig. 8 is a flowchart of a specific implementation for realizing Operation S1023 in the present disclosure. As shown in Fig. 8, in the present disclosure, Operation S1023 includes operations S10231 to S10232.

At Operation S10231, all of the first-type service container groups, the second-type service container groups, and the third-type service container groups are sorted to obtain a processing sequence.

The technical solution of the present disclosure does not limit the rules used in sorting, that is, either random sorting or non-random sorting can be used.

In the present disclosure, sorting may be based on "bandwidth" size.

As an option, first, according to the total bandwidth of services carried by each of the first-type service container groups, all the first-type service container groups are sorted in descending order of total bandwidth to obtain a first sequence; then, according to the total bandwidth of services carried by each of the second-type service container groups, all the second-type service container groups are sorted in descending order of total bandwidth to obtain a second sequence; and next, according to the maximum allocated bandwidth of each of the third-type service container groups, all the third-type service container groups are sorted in descending order of maximum allocated bandwidth, to obtain a third sequence; finally, the second sequence is connected to tail of the first sequence and the third sequence is connected to tail of the second sequence, to obtain the processing sequence.

As another option, according to the total bandwidth of the services carried by each of the first-type service container groups, the total bandwidth of the services carried by each of the second-type service container groups, and the maximum allocated bandwidth of each of the third-type service container groups, all of the first-type service container groups, the second-type service container groups, and the third-type service container groups are sorted in descending order of bandwidth, to obtain the processing sequence (referring to as "sorting method 2" for short).

In the present disclosure, the sorting may be performed according to a "delay priority". A delay priority can be allocated to a service container group according to the delay requirement of each of the client services carried in the service container group; for example, if the client services carried in the service container group have a high delay requirement (i.e., if the delay is required to be small during transmission), a higher delay priority can be allocated to the service container group; if the client services carried in the service container group have a low delay requirement (i.e., a large delay is allowed during transmission), a lower delay priority can be assigned to the service container group. The operation of allocating the delay priority to the service container group may be performed manually, or may be automatically performed by the OTN device based on a certain rule (the allocation algorithm is manually preset). The technical solution of the present disclosure does not limit the specific algorithm used for allocating the delay priority to the service container group.

When performing sorting, first, the delay priority of each of the first-type service container groups, the second-type service container groups, and the third-type service container groups is determined; and then, all of the first-type service container groups, the second-type service container groups, and the third-type service container groups are sorted in descending order of delay priority, to obtain the processing sequence.

At Operation S10232, each of the first-type service container groups, the second-type service container groups and the third-type service container groups is mapped into the unit blocks of the data frame in sequence according to a sequential order in the processing sequence.

When mapping according to the processing sequence, only one first-type service container group, one second-type service container group, or one third-type service container is processed each time. Mapping a service container group into the unit blocks of the optical transport network frame includes: first, according to the number of the unit blocks need to be occupied by the first-type service container group, the second-type service container group or the third-type service container group, determining a location distribution of the unit blocks occupied by the first-type service container group, the second-type service container group or the third-type service container group based on the sigma-delta algorithm; and then, bearing the first-type service container group, the second-type service container group or the third-type service container group into the determined unit blocks.

In the present disclosure, based on the sigma-delta algorithm, a certain number of unit blocks (obtained by Operation S1022) need to be occupied by a certain service container group can be evenly distributed in idle unit blocks (unallocated unit blocks) within the data frame. Therefore, when the number of unit blocks occupied by a certain service container group is certain, if in two frames, the order of the service container group in the processing sequence is changed, the location of the unit blocks occupied by the service container group in the two frames may also be changed. The specific operation process of the sigma-delta algorithm belongs to the conventional technology in the art, and will not be repeated here.

The above operations S101 and S102 are both performed by a sending-side node (an OTN device). After completing the processing of the above operations S101 and S102, the sending-side node will send the optical transport network frame containing the ODU frame or the FlexO frame to a receiving-side node (i.e., realizing the sending of the data frame), to realize the sending of the client service.

The receiving-side node may receive the optical transport network frame containing the ODU frame or the FlexO frame (that is, the data frame has been received), and demap the service container from the unit blocks divided from the data frame, and obtain the data of the corresponding client service from the service container.

The technical solution of the present disclosure will be described in detail below with reference to specific examples.

### Example I:

Between two OTN devices, 100 services of fixed bit rate with a bandwidth of 3 Mbps that require clock transparent transmission and 3 services of fixed bit rate that do not require clock transparent transmission are communicated by OTU2 frames. The 3 services of fixed bit rate that do not require clock transparent transmission have promised bandwidths of 5 Mbps, 8 Mbps and 10 Mbps, respectively.

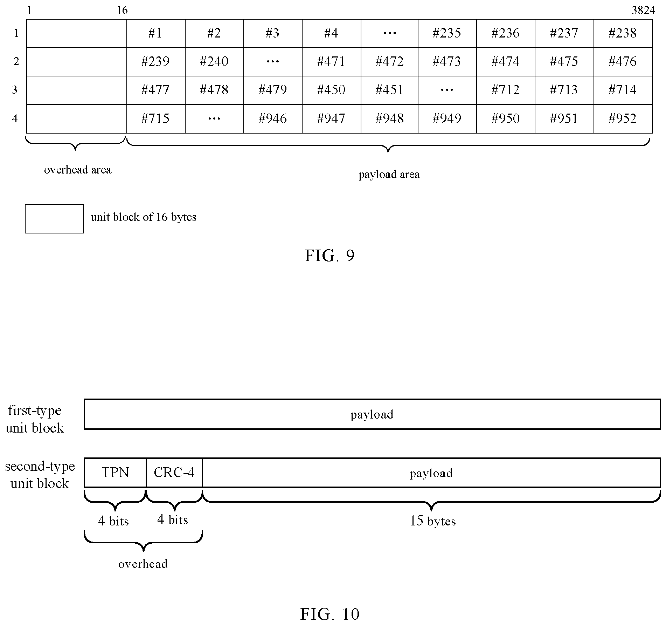

Fig. 9 is a schematic diagram of dividing a payload area of an ODUO frame into unit blocks by 16 bytes in the present disclosure. Fig. 10 is another schematic structural diagram of a first-type unit block and a second-type unit block in the present disclosure. As shown in Figs. 9 and 10, it is assumed that the data frame consists of one ODU frame, and the payload area of the ODU frame is divided into unit blocks with a length of 16 bytes. In this case, the payload area is divided into 952 unit blocks of fixed length of 16 bytes; in the second-type unit block, 1 byte is configured as the overhead portion, and the remaining 15 bytes are used as the payload portion. In the overhead portion, 4 bits are used to indicate the identification information of the service container (in this example, taking the identification information being the TPN of the client service carried by the service container as an example), and the remaining 4 bits are used to indicate the CRC-4 check information.

It can be obtained by calculation that the bandwidth corresponding to each unit block is about 1.3 Mbps. For the first-type unit block, the bandwidth corresponding to the payload portion is about 1.3 Mbps; for the second-type unit block, the bandwidth corresponding to the payload portion thereof is 1.3Mbps^{∗}15/16≈1.22Mbps.

Operation a1, on the sending side, 100 services of fixed bit rate with a bandwidth of 3 Mbps that require clock transparent transmission are mapped into 100 first-type service containers, respectively, wherein the 100 first-type service containers are represented by OSU#1 to OSU#100. Three services of fixed bit rate with respective promised bandwidths of 5 Mbps, 8 Mbps, and 10 Mbps that do not require clock transparent transmission are mapped into 3 second-type service containers, respectively. The 3 OSU service containers are represented by OSU#101 to OSU#103, respectively.

Operation a2, on the sending side, the first-type service containers OSU#1 to OSU#100 are divided into 100 first-type service container groups, wherein the 100 first-type service container groups are represented as OSUG#1 to OSUG#100, respectively, and the first-type service container group OSUG#i contains the first-type service container OSU#i, i ∈ [1, 100] and is an integer. The second-type service containers OSU#101 to OSU#103 are divided into one second-type service container group, and the one second-type service container group is represented as OSUG#101.

Operation a3, on the sending side, the numbers of unit blocks occupied by the first-type service container groups OSUG#1 to OSUG#100 and by the second-type service container group OSUG#101 are calculated, respectively.

The first-type service containers correspond to the first-type unit blocks, and the second-type service containers correspond to the second-type unit blocks.

For the first-type service container groups OSUG#1 to OSUG#100, the number of first-type unit blocks need to be occupied by each first-type service container group is 3 Mbps/1.3 Mbps, rounded up to 3.

For the second-type service container group OSUG#101, it includes the second-type service containers OSU#101 to OSU#103; the number of second-type unit blocks need to be occupied by the second-type service container OSU#101 is 5 Mbps/1.22 Mbps, rounded up to 5, the number of second-type unit blocks need to be occupied by the second-type service container OSU#102 is 8 Mbps/1.22 Mbps, rounded up to 7, and the number of second-type unit blocks need to be occupied by the second-type service container OSU#103 is 10 Mbps/1.22 Mbps, rounded up to 9, 5+7+9=21, that is, the number of second-type unit blocks need to be occupied by the second-type service container group OSUG#101 is 21.

Operation a4: on the sending side, the first-type service container groups OSUG#1 to OSUG#100 and the second-type service container group OSUG#101 are sorted, to obtain a processing sequence.

Assuming the sorting is performed according to the aforementioned "sorting method 2", a processing sequence C can be obtained:
C={OSUG#101, OSUG#1, OSUG#2, ..., OSUG#100}

At this point, corresponding attribute information can be constructed for each service container group, and the attribute information includes: a service container group number and the number of occupied unit blocks; the service container group number is used to distinguish different service container groups; for example, the service container group number corresponding to the second-type service container group OSUG#101 is 1, and the service container group numbers corresponding to the first-type service container groups OSUG#1 to OSUG#100 are 2 to 101, respectively.

Operation a5: on the sending side, based on the processing sequence, the second-type service container group OSUG#101 and the first-type service container groups OSUG#1 to OSUG#100 are sequentially mapped into corresponding unit blocks.

First, mapping is performed on the second-type service container group OSUG#101. Specifically, according to the sigma-delta algorithm, the specific distribution locations of 21 unit blocks need to be occupied by the second-type service container group OSUG#101 in 952 idle unit blocks are calculated, and the second-type service containers OSU#101 to OSU#103 are mapped into the determined 21 second-type unit blocks. Since the second-type unit blocks include a service identifier, the locations of the second-type unit blocks occupied respectively by the second-type service containers OSU#101 to OSU#103 in each frame may be different.

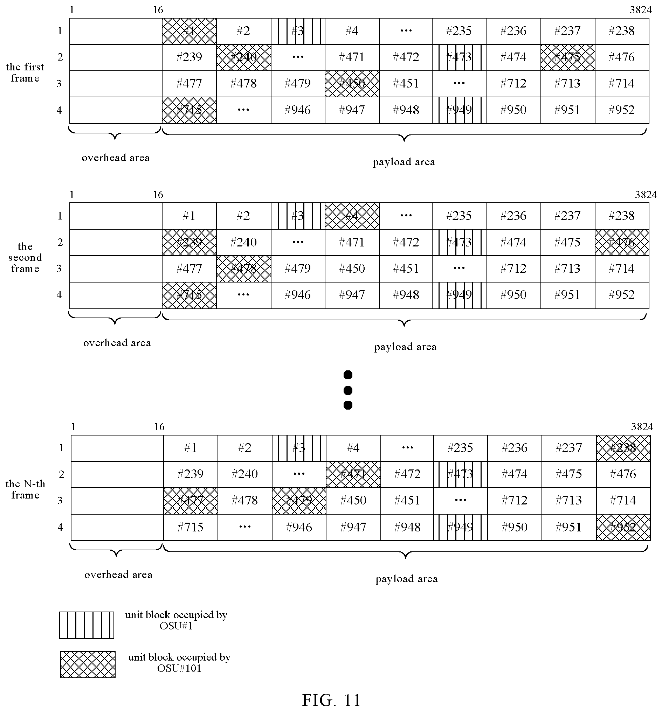

Fig. 11 is a schematic diagram of bearing services OSU#1 and OSU#101 in different ODUO frames in the present disclosure. As shown in Fig. 11, taking the second-type service container OSU#101 as an example, 5 second-type unit blocks occupied by the second-type service container OSU#101 may be any 5 of 21 second-type unit blocks occupied by the second-type service container group, and the locations of the occupied 5 second-type unit blocks in each frame may be different.

Then, mapping is performed on the first-type service container group OSUG#1. At this point, the number of idle unit blocks is 952-21=931. According to the sigma-delta algorithm, the specific distribution locations of 3 unit blocks need to be occupied by the first-type service container group OSUG#1 in 931 idle unit blocks are calculated, and the first-type service container OSU#1 is mapped into the determined 3 first-type unit blocks.

Based on the same processing method, the remaining 99 first-type service container groups OSUG#2 to OSUG#100 are mapped to idle units in sequence, respectively.

Continue to refer to Fig. 11, in the case that the processing sequence remains unchanged, the locations of 3 first-type unit blocks occupied by each of the first-type service container groups OSUG#1 to OSUG#100 in different frames are fixed; Fig. 11 exemplarily shows the distribution of the first-type unit blocks occupied by the first-type service container group OSUG#1 in different frames.

Obviously, in the present disclosure, it is also possible that the distribution locations of the unit blocks occupied by all the service container groups may be determined based on the sigma-delta algorithm first, and then the service container groups are sequentially mapped into the corresponding unit blocks.

Operation a6, on the sending side, the attribute information (the service container group numbers and the numbers of occupied unit blocks) of the second-type service container group OSUG#101 and the first-type service container groups OSUG#1 to OSUG#100 is carried into the ODUO frame.

It should be noted that, the operation of carrying the attribute information may also be performed before the operation of mapping the service container groups.

Operation a7, on the sending side, the ODUO frame is mapped into the ODU2 frame, packed as the OTU2 frame and sent.

On the receiving side, the OTU2 frame is received and demapped to the ODUO frame, the service containers are demapped from the unit blocks of the ODUO frame, and the corresponding client services are obtained from the service containers.

### Example II:

Between two OTN devices, 10 services of fixed bit rate with a bandwidth of 3 Mbps that require clock transparent transmission and 10 services of fixed bit rate that do not require clock transparent transmission are communicated by OTU2 frames. The 10 services of fixed bit rate that do not require clock transparent transmission have promised bandwidths of 5 Mbps, 8 Mbps, 10 Mbps, 12 Mbps, 16 Mbps, 18 Mbps, 20 Mbps, 22 Mbps, 24 Mbps and 30 Mbps, respectively.

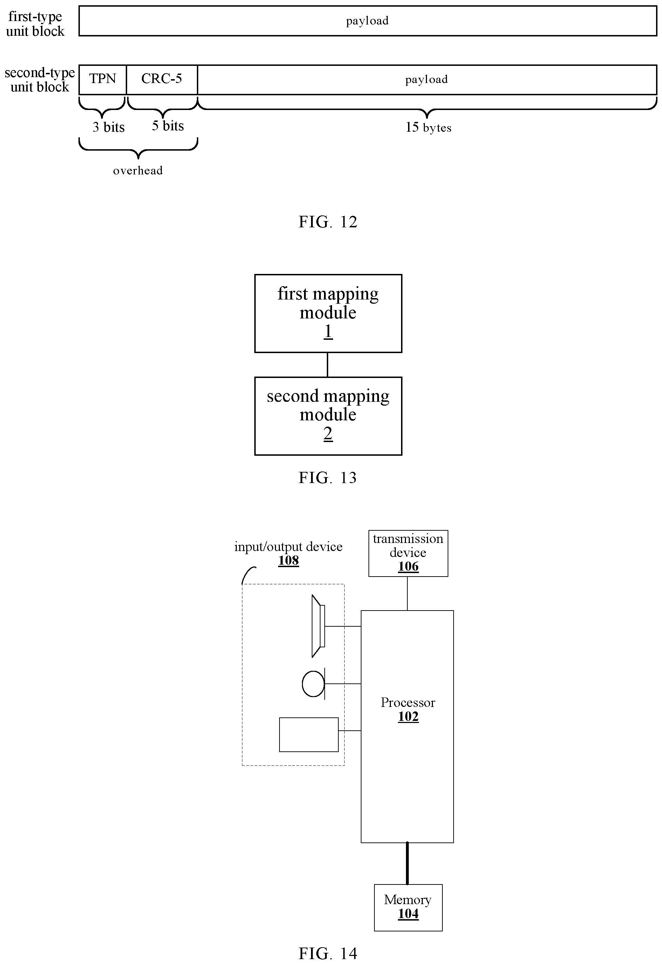

Fig. 12 is still another schematic structural diagram of a first-type unit block and a second-type unit block in the present disclosure. As shown in Fig. 12, it is assumed that the data frame consists of one ODU frame, and the payload area of the ODU frame is divided into unit blocks with a length of 16 bytes. In this case, the payload area is divided into 952 unit blocks of fixed length of 16 bytes; in the second-type unit block, 1 byte is configured as the overhead portion, and the remaining 15 bytes are used as the payload portion. In the overhead portion, 3 bits are used to indicate the identification information of the service container (in this example, taking the identification information being the TPN of the client service carried by the service container as an example), and the remaining 5 bits are used to indicate the CRC-5 check information.

It can be obtained by calculation that the bandwidth corresponding to each unit block is about 1.3 Mbps. For the first-type unit block, the bandwidth corresponding to the payload portion is about 1.3 Mbps; for the second-type unit block, the bandwidth corresponding to the payload portion thereof is 1.3Mbps^{∗}15/16≈1.22Mbps.

Operation b1, on the sending side, 10 services of fixed bit rate with a bandwidth of 3 Mbps that require clock transparent transmission are mapped into 10 first-type service containers, respectively, wherein the 10 first-type service containers are represented by OSU#1 to OSU#10. Ten services of fixed bit rate with respective promised bandwidths of 5 Mbps, 8 Mbps, 10 Mbps, 12 Mbps, 16 Mbps, 18 Mbps, 20 Mbps, 22 Mbps, 24 Mbps and 30 Mbps that do not require clock transparent transmission are mapped into 10 second-type service containers, respectively. The 10 second-type service containers are represented by OSU#11 to OSU#20, respectively.

Operation b2, on the sending side, the first-type service containers OSU#1 to OSU#10 are divided into 10 first-type service container groups, wherein the 10 first-type service container groups are represented as OSUG#1 to OSUG#10, respectively, and the first-type service container group OSUG#i contains the first-type service container OSU#i, i ∈ [1, 100] and is an integer.

Since only 3 bits in the overhead portion of the second-type unit block are used to represent the identification information of the service container, the number of the second-type service containers included in each second-type service container group is 2³=8. In this case, the 10 second-type service containers OSU#11 to OSU#20 should be divided into at least 2 second-type service container groups. It is assumed that the 10 second-type service containers OSU#11 to OSU#20 are evenly divided into 2 second-type service container groups, and the 2 second-type service container groups are represented as OSUG#11 to OSUG#12, respectively. The second-type service container group OSUG#11 contains the second-type service containers OSU#11 to OSU#15, and the second-type service container group OSUG#12 contains the second-type service containers OSU#16 to OSU#20.

Operation b3, on the sending side, the numbers of unit blocks occupied by the first-type service container groups OSUG#1 to OSUG#10 and by the second-type service container groups OSUG#11, OSUG#12 are calculated, respectively.

The first-type service containers correspond to the first-type unit blocks, and the second-type service containers correspond to the second-type unit blocks.

It can be obtained by calculation that the number of first-type unit blocks need to be occupied by each of the first-type service container groups OSUG#1 to OSUG#10 is 3.

The numbers of the second-type unit blocks need to be occupied by the second-type service containers OSU#11 to OSU#20 are 5, 7, 9, 10, 14, 15, 17, 19, 20, and 25, respectively. At this point, the number of the second-type unit blocks need to be occupied by the second-type service container group OSUG#11 is 5+7+9+10+14=45, and the number of the second-type unit blocks need to be occupied by the second-type service container group OSUG#12 is 15+17+19+20+25=96.

Operation b4, on the sending side, the first-type service container groups OSUG#1 to OSUG#10 and the second-type service container group OSUG#11, OSUG#12 are sorted, to obtain a processing sequence.

Assuming the sorting is performed according to the aforementioned "sorting method 2", a processing sequence C can be obtained:
C={OSUG#12, OSUG#11, OSUG#1, OSUG#2, ..., OSUG#10}

At this point, corresponding attribute information can be constructed for each service container group, and the attribute information includes: a service container group number and the number of occupied unit blocks; the service container group number is used to distinguish different service container groups; for example, the service container group number corresponding to the second-type service container group OSUG#12 is 1, the service container group number corresponding to the second-type service container group OSUG#11 is 2, and the service container group numbers corresponding to the first-type service container groups OSUG#1 to OSUG#10 are 3 to 12 respectively.

Operation b5, on the sending side, based on the processing sequence, the second-type service container group OSUG#11, OSUG#12 and the first-type service container groups OSUG#1 to OSUG#10 are sequentially mapped into corresponding unit blocks.

First, mapping is performed on the second-type service container group OSUG#12. Specifically, according to the sigma-delta algorithm, the specific distribution locations of 96 unit blocks need to be occupied by the second-type service container group OSUG#12 in 952 idle unit blocks are calculated, and the second-type service containers OSU#16 to OSU#20 are mapped into the determined 96 second-type unit blocks. Since the second-type unit blocks include a service identifier, the locations of the second-type unit blocks occupied respectively by the second-type service containers OSU#16 to OSU#20 in each frame may be different.

Then, mapping is performed on the second-type service container group OSUG#11. At this point, the number of idle unit blocks is 952-96=856. According to the sigma-delta algorithm, the specific distribution locations of 45 unit blocks need to be occupied by the second-type service container group OSUG#11 in 856 idle unit blocks are calculated, and the second-type service containers OSU#11 to OSU#15 are mapped into the determined 45 second-type unit blocks. Since the second-type unit blocks include a service identifier, the locations of the second-type unit blocks occupied respectively by the second-type service containers OSU#11 to OSU#15 in each frame may be different.

Next, mapping is performed on the first-type service container group OSUG#1. At this point, the number of idle unit blocks is 856-45=811. According to the sigma-delta algorithm, the specific distribution locations of 3 unit blocks need to be occupied by the first-type service container group OSUG#1 in 811 idle unit blocks are calculated, and the first-type service container OSU#1 is mapped into the determined 3 first-type unit blocks.

Based on the same processing method, the remaining 9 first-type service container groups OSUG#2 to OSUG#10 are mapped to respective idle unit blocks in sequence, respectively.

In the case that the processing sequence remains unchanged, the locations of 3 first-type unit blocks occupied by each of the first-type service container groups OSUG#1 to OSUG#10 in different frames are fixed.

Obviously, in the present disclosure, it is also possible that the distribution locations of the unit blocks occupied by all the service container groups may be determined based on the sigma-delta algorithm first, and then the service container groups are sequentially mapped into the corresponding unit blocks.

Operation b6, on the sending side, the attribute information (the service container group numbers and the numbers of occupied unit blocks) of the second-type service container group OSUG#11, OSUG#12, and the first-type service container groups OSUG#1 to OSUG#10 is carried into the ODUO frame.

It should be noted that, the operation of carrying the attribute information may also be performed before the operation of mapping the service container groups.

Operation b7, on the sending side, the ODUO frame is mapped into the ODU2 frame, packed as the OTU2 frame and sent

On the receiving side, the OTU2 frame is received and demapped to the ODUO frame, the service containers are demapped from the unit blocks of the ODUO frame, and the corresponding client services are obtained from the service containers.

### Example III:

Between two OTN devices, 100 services of fixed bit rate with a bandwidth of 3 Mbps that require clock transparent transmission, 3 services of fixed bit rate that do not require clock transparent transmission, and 10 services of variable bit rate are communicated by OTU2 frames. The 3 services of fixed bit rate that do not require clock transparent transmission have promised bandwidths of 5 Mbps, 8 Mbps and 10 Mbps respectively, and a maximum allocated bandwidth allocated to the 10 services of variable bit rate is 50 Mbps.

Continue to refer to Figs. 9 and 10, it is assumed that the data frame consists of one ODU frame, and the payload area of the ODU frame is divided into unit blocks with a length of 16 bytes. In this case, the payload area is divided into 952 unit blocks of fixed length of 16 bytes; in the second-type unit block, 1 byte is configured as the overhead portion, and the remaining 15 bytes are used as the payload portion. In the overhead portion, 4 bits are used to indicate the identification information of the service container (in this example, taking the identification information being the TPN of the client service carried by the service container as an example), and the remaining 4 bits are used to indicate the CRC-4 check information.

It can be obtained by calculation that the bandwidth corresponding to each unit block is about 1.3 Mbps. For the first-type unit block, the bandwidth corresponding to the payload portion is about 1.3 Mbps; for the second-type unit block, the bandwidth corresponding to the payload portion thereof is 1.3Mbps^{∗}15/16≈1.22Mbps.

Operation c1, on the sending side, 100 services of fixed bit rate with a bandwidth of 3 Mbps that require clock transparent transmission are mapped into 100 first-type service containers, respectively, wherein the 100 first-type service containers are represented by OSU#1 to OSU#100. Three services of fixed bit rate with respective promised bandwidths of 5 Mbps, 8 Mbps, and 10 Mbps that do not require clock transparent transmission are mapped into 3 second-type service containers, respectively. The 3 OSU service containers are represented by OSU#101 to OSU#103, respectively. Ten services of variable bit rate are mapped into 10 third-type service containers, respectively. The 10 OSU service containers are represented by OSU#110 to OSU#119, respectively.

Operation c2, on the sending side, the first-type service containers OSU#1 to OSU#100 are divided into 100 first-type service container groups, wherein the 100 first-type service container groups are represented as OSUG#1 to OSUG#100, respectively, and the first-type service container group OSUG#i contains the first-type service container OSU#i, i ∈ [1, 100] and is an integer.

The second-type service containers OSU#101 to OSU#103 are divided into one second-type service container group, and the one second-type service container group is represented as OSUG#101.

The third-type service containers OSU#110 to OSU#119 are divided into one third-type service container group, and the one third-type service container group is represented as OSUG#102.

Operation c3, on the sending side, the numbers of unit blocks occupied by the first-type service container groups OSUG#1 to OSUG#100, by the second-type service container group OSUG#101and by the third-type service container group OSUG#102 are calculated, respectively.

The first-type service containers correspond to the first-type unit blocks, and the second-type service containers and the third-type service containers correspond to the second-type unit blocks.

For the first-type service container groups OSUG#1 to OSUG#100, the number of first-type unit blocks need to be occupied by each first-type service container group is 3 Mbps/1.3 Mbps, rounded up to 3.

For the second-type service container group OSUG#101, the numbers of second-type unit blocks need to be occupied by the second-type service containers OSU#101 to OSU#103 contained therein are 5, 7, and 9, respectively, that is, the number of second-type unit blocks need to be occupied by the second-type service container group OSUG#101 is 5+7+9=21.

For the third-type service container group OSUG#102, the number of the second-type unit blocks occupied by it is 50Mbps/1.22Mbps, rounded up to 41, that is, the number of the second-type unit blocks need to be occupied by the third-type service container group OSUG#102 is 41.

Operation c4, on the sending side, the first-type service container groups OSUG#1 to OSUG#100, the second-type service container group OSUG#101, and the third-type service container group OSUG#102 are sorted, to obtain a processing sequence.

Assuming the sorting is performed according to the aforementioned "sorting method 2", a processing sequence C can be obtained:
C={OSUG#102, OSUG#101, OSUG#1, OSUG#2, ..., OSUG#100}

At this point, corresponding attribute information can be constructed for each service container group, and the attribute information includes: a service container group number and the number of occupied unit blocks; the service container group number is used to distinguish different service container groups; for example, the service container group number corresponding to the third-type service container group OSUG#102 is 1, the service container group number corresponding to the second-type service container group OSUG#101 is 2, and the service container group numbers corresponding to the first-type service container groups OSUG#1 to OSUG#100 are 3 to 102, respectively.

Operation c5: on the sending side, based on the processing sequence, the third-type service container group OSUG#102, the second-type service container group OSUG#101 and the first-type service container groups OSUG#1 to OSUG#100 are sequentially mapped into corresponding unit blocks.

First, mapping is performed on the third-type service container group OSUG#102. Specifically, according to the sigma-delta algorithm, the specific distribution locations of 41 unit blocks need to be occupied by the third-type service container group OSUG#102 in 952 idle unit blocks are calculated, and the third-type service containers OSU#110 to OSU#119 are mapped into the determined 41 second-type unit blocks. Since the second-type unit blocks include a service identifier, the locations of the second-type unit blocks occupied respectively by the third-type service containers OSU#110 to OSU#119 in each frame may be different, and may be determined specifically by the real-time bandwidths of respective services of variable bit rate.

Then, mapping is performed on the second-type service container group OSUG#101. At this point, the number of idle unit blocks is 952-41=911. Specifically, according to the sigma-delta algorithm, the specific distribution locations of 21 unit blocks need to be occupied by the second-type service container group OSUG#101 in 911 idle unit blocks are calculated, and the second-type service containers OSU#101 to OSU#103 are mapped into the determined 21 second-type unit blocks. Since the second-type unit blocks include a service identifier, the locations of the second-type unit blocks occupied respectively by the second-type service containers OSU#101 to OSU#103 in each frame may be different.

Next, mapping is performed on the first-type service container group OSUG#1. At this point, the number of idle unit blocks is 911-21=890. According to the sigma-delta algorithm, the specific distribution locations of 3 unit blocks need to be occupied by the first-type service container group OSUG#1 in 890 idle unit blocks are calculated, and the first-type service container OSU#1 is mapped into the determined 3 first-type unit blocks.

Based on the same processing method, the remaining 99 first-type service container groups OSUG#2 to OSUG#10 are mapped to respective idle unit blocks in sequence, respectively.

In the case that the processing sequence remains unchanged, the locations of the 3 first-type unit blocks occupied by each of the first-type service container groups OSUG#1 to OSUG#100 in different frames are fixed.

Obviously, in the present disclosure, it is also possible that the distribution locations of the unit blocks occupied by all the service container groups may be determined based on the sigma-delta algorithm first, and then the service container groups are sequentially mapped into the corresponding unit blocks.

Operation c6, on the sending side, the attribute information (the service container group numbers and the numbers of occupied unit blocks) of the third-type service container group OSUG#102, the second-type service container group OSUG#101, and the first-type service container groups OSUG#1 to OSUG#100 is carried into the ODUO frame.

It should be noted that, the operation of carrying the attribute information may also be performed before the operation of mapping the service container groups.

Operation c7, on the sending side, the ODUO frame is mapped into the ODU2 frame, packed as the OTU2 frame and sent.

On the receiving side, the OTU2 frame is received and demapped to the ODUO frame, the service containers are demapped from the unit blocks of the ODUO frame, and the corresponding client services are obtained from the service containers.

Fig. 13 is a structural block diagram of an apparatus for service processing in optical transport network according to the present disclosure. As shown in Fig. 13, the apparatus for service processing includes a first mapping module 1 and a second mapping module 2.

The first mapping module 1 is configured to map a client service into a service container; and the second mapping module is configured to map the service container into a data frame, wherein the data frame includes multiple unit blocks for bearing the service container, the unit blocks are divided into first-type unit blocks and second-type unit blocks, the first-type unit blocks include a payload portion, and the second-type unit blocks include a payload portion and an overhead portion, the payload portion is used for bearing service data, and the overhead portion includes identification information of the service container.

For the specific description of the modules in the present disclosure, reference may be made to the corresponding content in the foregoing method for service processing, which will not be repeated here.

Fig. 14 is a structural block diagram of an electronic device according to the present disclosure. As shown in Fig. 14, the electronic device 10 may be a mobile terminal, a computer terminal or a similar computing device. The electronic device 10 includes one or more processors 102 (only one is illustrated in the figure, the processor 102 may include, but is not limited to, a processing device such as a MCU or a FPGA) and a memory 104; wherein, one or more programs are stored in the memory 104. When executed by the one or more processors 102, the one or more programs cause the one or more processors 102 to implement the operations in the methods for service processing provided in the foregoing embodiments.

In the present disclosure, the above mobile terminal may further include a transmission device 106 used for a communication function and an input/output device 108. It will be understood by those of ordinary skill in the art that the structure shown in Fig. 14 is only for illustration, and does not limit the structure of the above mobile terminal. For example, the mobile terminal 10 may further include more or less components than those shown in Fig. 14, or have a configuration different from that shown in Fig. 14.

The memory 104 may be configured to store computer programs, for example, software programs and modules of application software, such as computer programs corresponding to the method for service processing in optical transport network in the present disclosure. By running the computer program stored in the memory 104, the processor 102 executes various functional applications and data processing, that is, to implement the aforementioned method. The memory 104 may include high-speed random access memory, and may also include non-volatile memory, such as one or more magnetic storage devices, flash memories, or other non-volatile solid-state memories. In some instances, the memory 104 may further include memories located remotely from the processor 102, and these remote memories may be connected to the mobile terminal 10 through a network. The instances of such network include, but are not limited to, the Internet, an intranet, a local area network, a mobile communication network, and combinations thereof.

The transmission device 106 is configured to receive or transmit data via a network. The specific instance of the aforementioned network may include a wireless network provided by the communication provider of the mobile terminal 10. In an instance, the transmission device 106 includes a Network Interface Controller (NIC), which can be connected to other network devices through the base station so as to communicate with the Internet. In an instance, the transmission device 106 may be a Radio Frequency (RF) module, which is configured to communicate with the Internet wirelessly.

The present disclosure also provide a computer readable medium on which a computer program is stored, and when the program is executed by a processor, the operations in the methods for service processing provided in the foregoing embodiments are implemented.

The technical solutions provided by the present disclosure can solve the problem in the prior art of serious bandwidth waste caused by transmitting optical transport services by dividing the payload area into time slots, and achieve the effect of improving the bandwidth utilization of the optical transport network.

It will be understood by those of ordinary skill in the art that all or some of the steps in the methods disclosed above, functional modules/units in the system and the apparatus can be implemented as software, firmware, hardware, and appropriate combinations thereof. In a hardware implementation, the division between functional modules/units mentioned in the above description does not necessarily correspond to the division of physical components; for example, one physical component may have multiple functions, or one function or step may be executed cooperatively by several physical components. Some or all physical components may be implemented as software executed by a processor, such as a central processing unit, digital signal processor or microprocessor, or may be implemented as hardware, or as an integrated circuit, such as an application specific integrated circuit. Such software may be distributed on computer readable media, which may include computer storage media (or non-transitory media) and communication media (or transitory media). As known to those of ordinary skill in the art, the term computer storage media includes both volatile and nonvolatile, both removable and non-removable media that are implemented in any method or technology for storing information (such as computer readable instructions, data structures, program modules or other data flexible). The computer storage medium includes, but is not limited to, RAM, ROM, EEPROM, flash memory or other memory technology, CD-ROM, Digital Video Disc (DVD) or other optical disk storage, magnetic cartridge, magnetic tape, magnetic disk storage or other magnetic storage devices, or may any other medium for storing desired information and which can be accessed by a computer. In addition, as is well known to those of ordinary skill in the art, communication media typically contain computer readable instructions, data structures, program modules, or other data in a modulated data signal such as a carrier wave or other transmission mechanism, and can include any information delivery media.

Exemplary embodiments have been disclosed herein, and although specific terms are employed, they are used for and should only be construed as a general descriptive sense and not for purposes of limitation. In some instances, it will be apparent to those skilled in the art that features, characteristics and/or elements described in connection with a particular embodiment may be used alone or used in combination with features, characteristics and/or elements described in connection with other embodiments, unless expressly stated otherwise. Accordingly, it will be understood by those of ordinary skill in the art that various changes in form and details may be made therein without departing from the scope of the present disclosure as set forth in the appended claims.

## Claims

1. A method for service processing in optical transport network, comprising:
mapping a client service into a service container; and
mapping the service container into a data frame,
wherein the data frame comprises multiple unit blocks for bearing the service container, the unit blocks are divided into first-type unit blocks and second-type unit blocks, the first-type unit blocks comprise a payload portion, and the second-type unit blocks comprise a payload portion and an overhead portion, the payload portion is used for bearing service data, and the overhead portion comprises identification information of the service container.

2. The method of claim 1, wherein the service container is divided into a first-type service container, a second-type service container and a third-type service container,
the first-type service container is a service container for bearing a service of fixed bit rate that requires clock transparent transmission;
the second-type service container is a service container for bearing a service of fixed bit rate that does not require clock transparent transmission;
the third-type service container is a service container for bearing a service of variable bit rate; and
the first-type service container is carried in the first-type unit block, and the second-type service container and the third-type service container are carried in the second-type unit block.

3. The method of claim 2, wherein mapping the service container into the data frame comprises:
dividing all the first-type service containers into at least one first-type service container group, dividing all the second-type service containers into at least one second-type service container group, and dividing all the third-type service containers into at least one third-type service container group, wherein each first-type service container group comprises at least one first-type service container, each second-type service container group comprises at least one second-type service container, and each third-type service container group comprises at least one third-type service container;
determining the number of the unit blocks need to be occupied by each first-type service container group, each second-type service container group, and each third-type service container group, respectively; and
for each first-type service container group, each second-type service container group, and each third-type service container group, mapping the first-type service container group, the second-type service container group, or the third-type service container group into the unit blocks of the data frame according to the number of the unit blocks need to be occupied by the first-type service container group, the second-type service container group, or the third-type service container group.

4. The method of claim 3, wherein determining the number of the unit blocks need to be occupied by each first-type service container group, each second-type service container group, and each third-type service container group, respectively comprises:
for each first-type service container group, calculating the number of the unit blocks need to be occupied by each first-type service container in the first-type service container group according to a bandwidth of a service carried by the first-type service container in the first-type service container group and a bandwidth of the unit blocks, and summing the numbers of the unit blocks need to be occupied by all the first-type service containers in the first-type service container group, to obtain the number of the unit blocks need to be occupied by the first-type service container group;
for each second-type service container group, calculating the number of the unit blocks need to be occupied by each second-type service container in the second-type service container group according to a bandwidth of a service carried by the second-type service container in the second-type service container group and the bandwidth of the unit blocks, and summing the numbers of the unit blocks need to be occupied by all the second-type service containers in the second-type service container group, to obtain the number of the unit blocks need to be occupied by the second-type service container group; and
for each third-type service container group, determining a maximum allocated bandwidth allocated to the third-type service container group according to a bandwidth of a service carried by each third-type service container in the third-type service container group, and calculating the number of the unit blocks need to be occupied by the third-type service container group according to the maximum allocated bandwidth and the bandwidth of the unit blocks.

5. The method of claim 3, wherein for each first-type service container group, each second-type service container group, and each third-type service container group, mapping the first-type service container group, the second-type service container group, or the third-type service container group into the unit blocks of the data frame according to the number of the unit blocks need to be occupied by the first-type service container group, the second-type service container group, or the third-type service container group comprises:
sorting all of the first-type service container groups, the second-type service container groups, and the third-type service container groups to obtain a processing sequence; and
mapping each of the first-type service container groups, the second-type service container groups and the third-type service container groups into the unit blocks of the data frame in sequence according to a sequential order in the processing sequence;
wherein mapping the first-type service container group, the second-type service container group or the third-type service container group into the unit blocks of the data frame comprises:
determining, according to the number of the unit blocks need to be occupied by the first-type service container group, the second-type service container group or the third-type service container group, a location distribution of the unit blocks occupied by the first-type service container group, the second-type service container group or the third-type service container group based on sigma-delta algorithm; and
bearing the first-type service container group, the second-type service container group or the third-type service container group into the determined unit blocks.

6. The method of claim 5, wherein sorting all of the first-type service container groups, the second-type service container groups, and the third-type service container groups to obtain the processing sequence comprises:
sorting, according to a total bandwidth of services carried by each of the first-type service container groups, all the first-type service container groups in descending order of total bandwidth to obtain a first sequence;
sorting, according to a total bandwidth of services carried by each of the second-type service container groups, all the second-type service container groups in descending order of total bandwidth to obtain a second sequence;
sorting, according to a maximum allocated bandwidth of each of the third-type service container groups, all the third-type service container groups in descending order of maximum allocated bandwidth to obtain a third sequence;
connecting the second sequence to tail of the first sequence and connecting the third sequence to tail of the second sequence, to obtain the processing sequence;
or sorting, according to the total bandwidth of the services carried by each of the first-type service container groups, the total bandwidth of the services carried by each of the second-type service container groups, and the maximum allocated bandwidth of each of the third-type service container groups, all of the first-type service container groups, the second-type service container groups, and the third-type service container groups in descending order of bandwidth, to obtain the processing sequence.

7. The method of claim 5, wherein sorting all of the first-type service container groups, the second-type service container groups, and the third-type service container groups to obtain the processing sequence comprises:
determining a delay priority of each of the first-type service container groups, the second-type service container groups, and the third-type service container groups; and
sorting all of the first-type service container groups, the second-type service container groups, and the third-type service container groups in descending order of delay priority, to obtain the processing sequence.

8. The method of any one of claims 1 to 7, wherein the service container comprises an ODU frame or an OSU frame.

9. An apparatus for service processing in optical transport network, comprising:
a first mapping module configured to map a client service into a service container; and
a second mapping module configured to map the service container into a data frame,
wherein the data frame comprises multiple unit blocks for bearing the service container, the unit blocks are divided into first-type unit blocks and second-type unit blocks, the first-type unit blocks comprise a payload portion, and the second-type unit blocks comprise a payload portion and an overhead portion, the payload portion is used for bearing service data, and the overhead portion comprises identification information of the service container.

10. An electronic device, comprising:
one or more processors; and
a memory storing one or more programs thereon, wherein the one or more programs, when executed by the one or more processors, cause the one or more processors to implement the method of any one of claims 1 to 8.

11. A computer readable medium storing a computer program thereon, wherein the computer program, when executed by a processor, cause the processor to implement the method of any one of claims 1 to 8.
